(19) Europäisches Patentamt
European Patent Office
Office européen des brevets

(11) **EP 4 624 042 A1**

(12) **EUROPEAN PATENT APPLICATION**

(43) Date of publication:
**01.10.2025 Bulletin 2025/40**

(21) Application number: **24167584.2**

(22) Date of filing: **28.03.2024**

(51) International Patent Classification (IPC):
**B01J 20/20** (2006.01)   **B01D 15/08** (2006.01)
**B01D 53/02** (2006.01)   **B01J 20/28** (2006.01)
**B01J 20/30** (2006.01)

(52) Cooperative Patent Classification (CPC):
**B01J 20/3007; B01D 15/267; B01D 53/02;
B01J 20/20; B01J 20/28057; B01J 20/28069;
B01J 20/28083; B01J 20/3042; B01J 20/3078**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Act&Sorb B.V.**
**3600 Genk (BE)**

(72) Inventors:
• **AHMAD, Arslan**
  **3600 Genk (BE)**

• **HOGERVORST, Jeroen Lambertus Johannes**
  **3600 Genk (BE)**
• **MBALLA MBALLA, Monique**
  **3600 Genk (BE)**
• **TRICARICO, Maxime**
  **3600 Genk (BE)**
• **TOSI, Claudio**
  **3600 Genk (BE)**
• **VANREPPELEN, Kenny**
  **3600 Genk (BE)**

(74) Representative: **Forresters IP LLP**
**Skygarden**
**Erika-Mann-Straße 11**
**80636 München (DE)**

(54) **MESOPOROUS ACTIVATED CARBON**

(57) The present invention relates to activated carbon. In particular, the present invention relates to activated carbon, wherein the surface of the activated carbon comprises pores, wherein 45 % or greater of the total volume of pores are mesoporous pores.

## Description

FIELD OF THE INVENTION

The present invention relates to activated carbon. In particular, the present invention relates to activated carbon, wherein the surface of the activated carbon comprises pores, wherein 45 % or greater of the total volume of pores are mesoporous pores.

BACKGROUND OF THE INVENTION

Pollutants such as endocrine disrupting chemicals (EDC), pharmaceutical active compounds (PhAC), polycyclic aromatic hydrocarbons (PAH), perfluoroalkyl and polyfluoroalkyl substances (PFAS), chloramines, siloxanes and acidic gases such as hydrogen sulphide ($H_2S$), sulphur oxides ($SO_x$) and nitrogen oxides ($NO_X$) pose a threat to human and animal health when present in a fluid, such as water, oil spills, industrial effluents and combustion processes.

For example, endocrine disrupting chemicals (EDC) are able to mimic natural hormones and interfere with the nervous and reproductive systems of humans and wildlife, whilst pharmaceutical active compounds (PhAC) are persistent and nonbiodegradable pollutants. Examples of endocrine disrupting chemicals (EDC) and pharmaceutical active compounds (PhAC) include ß-blockers, antibiotics, paracetamol, diclofenac, sulfamethoxazole, ibuprofen and irbesartan. Ibuprofen, a commonly used non-steroidal and anti-inflammatory drug, is generally safe when used appropriately but carries potential health risks such as gastrointestinal issues like ulcers, bleeding and cardiovascular risks such as heart attacks, strokes, kidney and liver damage and allergic reactions when present as a fluid pollutant.

As a further example, chloramines are harmful to humans and nature because chloramines can cause eye, nose and skin problems, breathing difficulties such as asthma, stomach upset and dehydration as well as blood and kidney disorders. Chloramines can also damage pipe faucets, water quality as well as aquatic animals and plants.

These pollutants require effective removal methods during fluid treatment processes.

Adsorbents such as zeolite, celite, cellulosic aerogel and modified mineral clay are regularly used in the removal of pollutants from a fluid. However, these adsorbents have limitations in terms of their effectiveness and stability. Another adsorbent regularly used in the removal of pollutants from a fluid are carbon-based materials like biochar and activated carbon. However, the adsorption performance of carbon-based materials is restricted owing to the carbon-based materials being influenced by factors such as water quality, such as the presence of impurities, and properties of the carbon-based materials such as the type of functional group on the surface of the carbon-based materials, the surface charge and the pore structure and size of the carbon-based materials. The pore size, such as micropores, mesopores and macropores, will have a strong influence how the pore contributes to adsorption.

Current technologies used to remove endocrine disrupting chemicals (EDC) and pharmaceutical active compounds (PhAC) from a fluid include biodegradation membrane filtration, advanced oxidation, coagulation sedimentation and adsorption. Unfortunately, such current technologies used to remove endocrine disrupting chemicals (EDC) and pharmaceutical active compounds (PhAC) from a fluid are associated with a number of disadvantages. For example, biodegradation membrane filtration is associated with disadvantages such as (a) incomplete removal of pollutants in water, (b) being too compound specific to break down all pharmaceuticals present in a fluid, (c) being considered a generally slow process in the field of pollutant removal, and, (d) being ineffective at breaking down all pharmaceuticals present in a fluid owing to the adaptation of microbes to the pharmaceuticals resulting in the microbe-pharmaceutical combination resisting breakdown. For a further example, advance oxidation is associated with disadvantages such as (a) only being able to partially eliminate pollutants from a fluid, (b) being too compound specific to break down all pharmaceuticals present in a fluid, (c) being too complex to implement, and, (d) requiring expensive equipment and maintenance as well as requiring a large input of energy to operate. For a further example, coagulation sedimentation is associated with disadvantages such as (a) only being able to partially eliminate pollutants from a fluid, (b) non-selective removal of pollutants which is an issue if only targeted pollutants are to be removed from a fluid, (c) being too expensive to implement, (d) the formation of toxic sludge during operation, and, (e) limited effectiveness when used in an environment where the concentration of pollutant in the fluid is low. For a further example, adsorption is associated with disadvantages such as (a) non-selective removal of pollutants which is an issue if only targeted pollutants are to be removed from a fluid, (b) efficiency being dependent on properties of the pharmaceuticals (such as surface charge and chemical structure) and (c) pH of the environment in which the pollutants must be removed.

Current technologies used to remove perfluoroalkyl and polyfluoroalkyl substances (PFAS) from a fluid include hydrogel-based sorbents, modified clays intercalated with one or more multifunctional-quaternary amine compound, quaternized cotton, crosslinked chitosan beads, cationic-amine engineered sorbents and carbon materials modified with oxides such as but not limited to copper oxides, iron oxides and/or zinc oxides. Unfortunately, such current technologies used to perfluoroalkyl and polyfluoroalkyl substances (PFAS) from a fluid are associated with a number of disadvantages. For example, the technologies are associated with disadvantages such as (a) non-selective removal of pollutants which is an issue if only targeted pollutants are to be removed from a fluid, (b) efficiency being dependent on properties of the pollutants being removed (such as surface charge and chemical structure), (c) pH of the environment in which the pollutants must be removed, and, (d) high costs owing to regular replacement of parts.

Current technologies used to remove acidic gases from fluids include wet/dry desulfurization, chemical absorption, membrane separation and cryogenic distillation. However, all of these technologies have high energy consumption and operational costs. For example, wet scrubbing with chemical solvents, dry sorption with metal oxides or zeolites and biological treatment with microorganisms are regularly used to remove hydrogen sulphide ($H_2S$) from fluids. However, these methods are limited owing to high water consumption, low selectivity and/or a slow reaction rate.

Another material routinely used in the removal of pollutants from a fluid is activated carbon. The use of activated carbon as an agent for the removal of pollutants from a fluid is well known in the art, as exemplified in US7361280B2, US10702853B2, US9023755B2, US9120079B1, US20230107676A1 and US20230234024A1. Methods of making activated carbon is well-known as exemplified EP3619283B1. The use of activated carbon is advantageous because activated carbon is more environmentally friendly and simpler in design than other removal methods. Further advantageously, activated carbon can be low cost and has operational simplicity.

Activated carbon has a high surface area owing to activated carbon being a highly porous material. This makes activated carbon a useful material in the removal of pollutants from a fluid. The pores of activated carbon can be classified as micropores, mesopores and macropores. Adsorption typically occurs in both micropores and mesopores, whilst mesopores and macropores act as transport pores.

Adsorption of pollutants by activated carbon is dependent on characteristics such as pore volume, pore size distribution, the internal surface area of the pores and the surface chemistry of the activated carbon. The size, structure, volume of the pores of activated carbon as well as the surface chemistry of the activated carbon are dependent on the precursor material used to make the activated carbon. Ideally, the pore size of the activated carbon is two to five times larger than the diameter of the pollutant otherwise the pollutant may not be able to enter the pore. Further ideally, the activated carbon includes nitrogen and/or oxygen functional groups on its surface. The presence of nitrogen containing functional groups advantageously increases the basicity of the activated carbon. This is advantageous because functional groups associated with an increase in basicity and/or nitrogen content are also associated with increasing the hydrophilic properties of the activated carbon. It is believed that the presence of nitrogen-containing functional groups such as amines or amides can introduce polar sites on the surface of activated carbon, which enhances the affinity of the activated carbon for polar or hydrophilic substances. This increased hydrophilicity is advantageous in application where water treatment and/or adsorption of polar molecules is desired. Further advantageously, by increasing the basicity of the activated carbon, the activated carbon will become more efficient in adsorbing acidic contaminants.

Unfortunately, the characteristics such as pore volume, pore size distribution, the internal surface area of the pores and the surface chemistry of the activated carbon can limit the use of activated carbon as an adsorbent in the removal of pollutants from a fluid. For example, activated carbon comprising mostly large pores (such as on the scale of macropores) might not be efficient in adsorbing small pollutants, whereas activated carbon comprising mostly small mores (such as micropores) might become overly saturated too rapidly. There is therefore a need for an improved activated carbon.

SUMMARY OF THE INVENTION

The present invention relates to activated carbon. In particular, the present invention relates to activated carbon, wherein the surface of the activated carbon comprises pores, wherein 45 % or greater of the total volume of pores are mesoporous pores.

Representative features of the present invention are set out in the following clauses, which stand alone or may be combined, in any combination, with one or more features disclosed in the text of the specification.

The present invention is as set out in the following clauses:

1. Activated carbon, the surface of the activated carbon comprising pores, wherein 45 % or greater of the total volume of pores are mesoporous pores.

2. The activated carbon of clause 1, wherein from 45 to 84 %, or, from 45 to 70 %, or, from 50 to 60 %, or, from 45 to 58 %, or, from 50 to 58 %, or, from 51 to 55 %, or, from 51.7 to 53.4 % of the total volume of pores are mesoporous pores.

3. The activated carbon of clause 1 or clause 2, wherein the mesoporous pores have a diameter of from 2 to 50 nm.

4. The activated carbon of any one of clauses 1 to 3, where the activated carbon has a total pore volume of from 0.84 ml/g or less, or, from 0.80 ml/g or less, or, from 0.75 ml/g or less, or, from 0.70 ml/g or less, or, from 0.65 ml/g or less, or, from 0.45 to 0.70 ml/g, or, from 0.50 to 0.65 ml/g, or, from 0.526 to 0.624 ml/g.

5. The activated carbon of any one of clauses 1 to 4, wherein the activated carbon has a Brunauer-Emmett-Teller (BET) specific surface area accessible to nitrogen of from 600 to 1150 $m^2/g$, or, from 700 to 1150 $m^2/g$, or, from 750 to 1150 $m^2/g$, or, from 800 to 1150 $m^2/g$, or, from 900 to 1150 $m^2/g$, or, from 900 to 1050 $m^2/g$, or, from 945 to 1024 $m^2/g$.

6. The activated carbon of any one of clauses 1 to 5, wherein the activated carbon comprises nitrogen, wherein the nitrogen is present at from 1.1 to 2.1 mass %, or, from 1.1 to 2.0 mass %, or, from 1.1 to 1.8 mass %, or, from 1.1 to 1.6 mass %, or, from 1.2 to 1.5 mass %, or, from 1.3 to 1.4 mass %, or, from 1.33 to 1.37 mass % of the total mass of the activated carbon.

7. The activated carbon of clause 6, wherein the activated carbon comprises nitrogen, wherein the nitrogen is present in the form of one or more of pyridine, amine, pyridone, pyrrole, quaternary-nitrogen, pyridine-N-oxide and/or nitrogen oxides ($NO_x$).

8. The activated carbon of any one of clauses 1 to 7, wherein the surface of the activated carbon comprises nitrogen, wherein the concentration of nitrogen present on the surface of the activated carbon is from 0.1 to 2 %, or, from 0.2 to 1.7 %, or, from 0.5 to 1.5 %, or, from 0.74 to 1.38 % of the total number of elements on the surface of the activated carbon.

9. The activated carbon of clause 8, wherein the surface of the activated carbon is a layer adjacent the air-activated carbon interface having a thickness of 10 nm.

10. The activated carbon of clause 8 or clause 9, wherein the surface of the activated carbon comprises nitrogen, wherein the nitrogen is in the form of one or more of pyridine, amine, pyridone, pyrrole, quaternary-nitrogen, pyridine-N-oxide and/or nitrogen oxides ($NO_x$).

11. The activated carbon of any one of clauses 1 to 10, wherein the activated carbon comprises carbon, wherein the carbon is present at from 80 to 90 mass %, or, from 80 to 95 mass %, or, from 85 to 90 mass %, or, from 85.09 to 87.99 mass % of the total mass of the activated carbon.

12. The activated carbon of any one of clauses 1 to 11, wherein the surface of the activated carbon comprises carbon, wherein the concentration of carbon present on the surface of the activated carbon is from 75 to 95 %, or, from 80 to 95 %, or, from 90 to 95 %, or, from 91.5 to 92.5 %, or, from 91.53 to 92.47 % of the total number of elements on the surface of the activated carbon.

13. The activated carbon of clause 12, wherein the surface of the activated carbon is a layer adjacent the air-activated carbon interface having a thickness of 10 nm.

14. The activated carbon of any one of clauses 1 to 13, wherein the activated carbon comprises potassium; optionally, wherein the activated carbon comprises potassium at a concentration of from 0.1 to 30 %, or, from 0.1 to 25 %, or, from 0.1 to 20 % of the total number of elements of the activated carbon.

15. The activated carbon of any one of clauses 1 to 14, wherein the activated carbon is in a granular, powdered and/or pelletised form.

16. The activated carbon of any one of clauses 1 to 15, for use in removing one or more of endocrine-disrupting chemicals (EDC), pharmaceutically active compounds (PhAC), polycyclic aromatic hydrocarbons (PAH), perfluoroalkyl and/or polyfluoroalkyl substances (PFAS), chloramines, such as but not limited to monochloramines, siloxanes, hydrogen sulphide ($H_2S$), sulphur oxides ($SO_x$) and/or nitrogen oxides ($NO_x$) from a fluid; optionally, wherein the fluid is a liquid or a gas, optionally, wherein the fluid is an aqueous liquid.

17. A composition comprising:

an activated carbon according to any one of clauses 1 to 16; and
a metallic salt; optionally,
wherein the metal in the salt is from group one or group two of the periodic table; optionally, wherein the metal in the salt is potassium.

18. A method of forming the activated carbon of any one of clauses 1 to 16, the method comprising the steps of:

(a) providing a carbonaceous precursor;
(b) pyrolysing the carbonaceous precursor to form a carbonised product;
(c) mixing the carbonised product with a salt; and
(d) activating the carbonised product to form the activated carbon.

19. The method of clause 18, wherein the carbonaceous precursor is medium-density fibreboard (MDF).

20. The method of clause 18 or clause 19, wherein the carbonaceous precursor is pyrolysed at a temperature of at least 500 °C, or, from 500 to 1100 °C, or, from 600 to 800 °C, or, 750 °C.

21. The method of any one of clauses 18 to 20, wherein the carbonaceous precursor is pyrolysed for from 10 to 120 minutes, or, from 15 to 60 minutes, or, from 20 to 40 minutes, or, 30 minutes.

22. The method of any one of clauses 18 to 21, wherein the salt is a potassium salt; optionally, wherein the potassium salt is potassium carbonate, potassium sulfate and/or potassium chloride.

23. The method of any one of clauses 18 to 22, wherein the carbonised product is ground to form a powdered carbonised product.

24. The method of clause 23, wherein the powdered carbonised product is extruded to form an extruded carbonised product, wherein the extrusion comprises the following steps:

(i) mixing the powdered carbonised product with a binder and water to form a mixture;
(ii) extruding the mixture through a pelletiser to form an extruded pellet;
(iii) baking the extruded pellet to form a baked extruded pellet, wherein the extruded pellet is baked for from 10 to 120 minutes, or, from 15 to 60 minutes, or, from 20 to 40 minutes, or, 30 minutes until a final temperature of from 200 to 500 °C, or, from 250 to 450 °C, or, from 300 to 400 °C, or, 350 °C is achieved; and
(iv) baking the baked extruded pellet to form an extruded carbonised product, wherein the baked extruded pellet is baked for from 10 to 120 minutes, or, from 15 to 60 minutes, or, from 20 to 40 minutes, or, 30 minutes until a final temperature of from 450 to 750 °C, or, from 500 to 700 °C, or, from 550 to 650 °C, or, 600 °C is achieved.

25. The method of clause 24, wherein the binder is lignin-based and/or tar, optionally wherein the binder is one or more of ammonium lignosulfonate, calcium lignosulfonate and/or sodium lignosulfonate.

26. The method of any one of clauses 18 to 25, wherein the carbonised product, powdered carbonised product and/or extruded carbonised product is activated at a temperature of at least 800 °C, or, at least 900 °C, or, at least 950 °C, or, from 800 to 1100 °C, or, from 900 to 1000 °C, or, at 950 °C.

27. The method of any one of clauses 18 to 26, wherein the carbonised product, powdered carbonised product and/or extruded carbonised product is activated for from 10 to 120 minutes, or, from 15 to 60 minutes, or, from 20 to 40 minutes, or, 30 minutes.

28. The method of any one of clauses 18 to 27, wherein the carbonised product, powdered carbonised product and/or extruded carbonised product is exposed to steam during activation, wherein the ratio of steam to the carbonised product is from 1:50 to 1:1, or, from 1:30 to 1:20, or, 1:25; optionally, wherein the steam is water.

29. The method of any one of clauses 18 to 28, wherein the activated carbon is in a granular, powdered and/or pelletised form.

30. Use of the activated carbon of any one of clauses 1 to 16 in removing pollutants from a fluid.

31. Use of the activated carbon of any one of clauses 1 to 16 in removing endocrine-disrupting chemicals (EDC) from a fluid.

32. Use of the activated carbon of any one of clauses 1 to 16 in removing pharmaceutically active compounds (PhAC) from a fluid.

33. Use of the activated carbon of any one of clauses 1 to 16 in removing polycyclic aromatic hydrocarbons (PAH) from a fluid.

34. Use of the activated carbon of any one of clauses 1 to 16 in removing perfluoroalkyl and/or polyfluoroalkyl substances (PFAS) from a fluid.

35. Use of the activated carbon of any one of clauses 1 to 16 in removing chloramines, such as but not limited to monochloramines, from a fluid.

36. Use of the activated carbon of any one of clauses 1 to 16 in removing siloxanes from a fluid.

37. Use of the activated carbon of any one of clauses 1 to 16 in removing hydrogen sulphide ($H_2S$), sulphur oxides ($SO_x$) and/or nitrogen oxides ($NO_x$) from a fluid.

38. Use of the activated carbon of any one of clauses 30 to 37, wherein the fluid is a liquid or a gas, optionally, wherein the fluid is an aqueous liquid.

DETAILED DESCRIPTION

Embodiments of the present disclosure will be described more fully hereinafter. Embodiments of the claims may, however, be embodied in many different forms and should not be construed as limited to the embodiments set forth herein.
The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present disclosure, the preferred systems and methods are now described.
Some of the terms used to describe the present invention are set out below:
"Acidic gases" refers to gases such as but not limited to hydrogen sulphide ($H_2S$), sulphur oxides ($SO_x$) and nitrogen oxides ($NO_x$). Acidic gases can be released during power generation and transportation and contribute to global warming and acid rain, thereby having a negative impact on the climate and ecosystems.
"Activated carbon" refers to a porous form of carbon. Activated carbon is usually produced by pyrolysis (carbonization) and activation, wherein activation is either physical (such as high temperatures) or chemical (such as exposure to phosphoric acid).
"Air-activated carbon interface" with respect to the activated carbon refers to the interface between the atmosphere and the activated carbon.
"Amine" refers to an organic compound or functional group that is derived from ammonia by replacing one or more hydrogen atoms with a substituent such as an alkyl or aryl group. Examples of amines include, but are not limited to, amino acids, biogenic amines, trimethylamine and aniline.
"Brunauer-Emmett-Teller (BET) specific surface area" refers to the surface area measurement of a sample obtained by multi-point analysis of a sample's surface area through gas adsorption analysis, wherein an inert gas such as nitrogen or argon is continuously flowed over a solid sample.
"Carbonised carbon" refers to a form of carbon that has undergone pyrolysis (carbonization).
"Chloramines" refers to a derivative of ammonia and organic amines wherein one or more N-H bond has been replaced by a N-Cl bonds. Examples of chloramines include, but are not limited to, monochloramine ($NH_2Cl$), dichloramine ($NHCl_2$) and nitrogen trichloride ($NCl_3$). Chloramines as pollutants are formed when chlorine and ammonia react in water. Factors such as pH, temperature and the chlorine-to-nitrogen ratio effect the amount of chloramine produced.
"Endocrine-disrupting chemicals (EDC)" refers to natural or human-made chemicals that may mimic, block or interfere with the body's hormones that are part of the endocrine system.
"Macroporous" refers to a porous material containing pores that are larger than 50 nm in diameter.
"Mesoporous" refers to a porous material containing pores that are from 2 to 50 nm in diameter.
"Microporous" refers to a porous material containing pores that are less than 2 nm in diameter.
"Nitrogen oxides ($NO_x$)" refers to a gas containing nitrogen and oxygen. Examples of nitrogen oxides includes nitric oxide (NO) and nitrogen dioxide ($NO_2$).
"Perfluoroalkyl and polyfluoroalkyl substances (PFAS)" refers to a group of synthetic organofluoride chemical compounds that contain at least one fully fluorinated methyl or methylene carbon atom (i.e., without any hydrogen, chlorine, bromine or iodine attached). Perfluoroalkyl and polyfluoroalkyl substances are widely used in many industries, such as but not limited to, paints, textile, paper and firefighting.
"Pharmaceutically active compounds (PhAC)" refers to an ingredient in a medicine that causes the desired effect of the medicine.

"Pollutants" refers to a harmful material. Examples of pollutants includes, but is not limited to, endocrine disrupting chemicals (EDC), pharmaceutical active compounds (PhAC), polycyclic aromatic hydrocarbons (PAH), perfluoroalkyl and polyfluoroalkyl substances (PFAS), chloramines, siloxanes and acidic gases such as hydrogen sulphide ($H_2S$), sulphur oxides ($SO_X$) and/or nitrogen oxides ($NO_X$). The pollutant may be present in a fluid, such as water, oil spills, industrial effluents and combustion gases.

"Polycyclic aromatic hydrocarbons (PAH)" refers to a group of chemicals that is composed of multiple aromatic rings. Examples of polycyclic aromatic hydrocarbons include, but are not limited to, naphthalene, anthracene and/or phenanthrene. Polycyclic aromatic hydrocarbons can occur naturally in coal, crude oil and gasoline. Polycyclic aromatic hydrocarbons can result from but are not limited to, burning coal, oil, gas, wood, garbage and/or tobacco. When a polycyclic aromatic hydrocarbon is present as a pollutant the compound can cause cancer and endocrine disruption. Polycyclic aromatic hydrocarbons can be found as a pollutant in a number of fluids, such as but not limited to, water, oil spills, industrial effluents and combustion processes.

"Pyrolysis" refers to the heating of an organic material, such as carbonaceous precursors, in the absence of oxygen. Typically, heating occurs at temperatures of from 500 to 1100 °C.

"Siloxanes" refers to a compound containing a functional group of two silicon atoms bound to an oxygen atom (Si-O-Si). Siloxanes can be formed when biogas is combusted, and the siloxanes produced can form silica deposits that damage the engines and turbines of the biogas combustion plant.

"Sulphur oxides ($SO_X$)" refers to a group of molecules made of sulphur and oxygen atoms. Examples include, but are not limited to, sulfur dioxide ($SO_2$) and sulfur trioxide (SOs).

"Quaternary-nitrogen" refers to a compound having a nitrogen group that is bonded to four alkyl or aryl groups.

Activated carbon

In some examples of the present invention, an activated carbon is provided. The surface of the activated carbon preferably comprising pores, wherein 45 % or greater of the total volume of pores are mesoporous pores.

In some examples of the present invention, the surface of the activated carbon preferably comprising pores, wherein from 45 to 84 %, or, from 45 to 70 %, or, from 50 to 60 %, or, from 45 to 59 %, or, from 50 to 59 %, or, from 51 to 55 %, or, from 51.7 to 53.4 % of the total volume of pores are mesoporous pores.

In some examples of the present invention, the mesoporous pores have a diameter of from 2 to 50 nm.

In some examples of the present invention, the activated carbon has a total pore volume of from 0.84 ml/g or less, or, from 0.80 ml/g or less, or, from 0.75 ml/g or less, or, from 0.70 ml/g or less, or, from 0.65 ml/g or less, or, from 0.45 to 0.70 ml/g, or, from 0.50 to 0.65 ml/g, or, from 0.526 to 0.624 ml/g.

In some examples of the present invention, the surface of the activated carbon preferably comprising pores, wherein from 30 to 60 %, or, from 35 to 55 %, or, from 40 to 50 %, or, from 46.6 to 48.3 % of the total volume of pores are microporous pores.

In some examples of the present invention, the activated carbon has a Brunauer-Emmett-Teller (BET) specific surface area accessible to nitrogen of from 600 to 1150 $m^2$/g, or, from 700 to 1150 $m^2$/g, or, from 750 to 1150 $m^2$/g, or, from 800 to 1150 $m^2$/g, or, from 900 to 1150 $m^2$/g, or, from 900 to 1050 $m^2$/g, or, from 945 to 1024 $m^2$/g.

In some examples of the present invention, the activated carbon has a Brunauer-Emmett-Teller (BET) specific surface area accessible to argon of greater than 600 $m^2$/g, or greater than 700 $m^2$/g, or, greater than 800 $m^2$/g, or, greater than 900 $m^2$/g, or, from 600 to 1300 $m^2$/g, or, from 750 to 1200 $m^2$/g, or, from 900 to 1050 $m^2$/g, or, from 923 to 1048 $m^2$/g.

In some examples of the present invention, the activated carbon comprises nitrogen, wherein the nitrogen is present at from 1.1 to 2.1 mass %, or, from 1.1 to 2.0 mass %, or, from 1.1 to 1.8 mass %, or, from 1.1 to 1.6 mass %, or, from 1.2 to 1.5 mass %, or, from 1.3 to 1.4 mass %, or, from 1.33 to 1.37 mass % of the total mass of the activated carbon.

In some examples of the present invention, the activated carbon comprises nitrogen, wherein the nitrogen is present in the form of one or more of pyridine, amine, pyridone, pyrrole, quaternary-nitrogen, pyridine-N-oxide and/or nitrogen oxides ($NO_X$).

In some examples of the present invention, the activated carbon comprises nitrogen in the form of pyridine, wherein the nitrogen in the form of pyridine is present at a concentration of from 10 to 35 %, or, from 15 to 30 %, or, from 16.96 to 27.32 % of the total number of nitrogen functional groups of the activated carbon.

In some examples of the present invention, the activated carbon comprises nitrogen in the form of amines, wherein the nitrogen in the form of amines is present at a concentration of from 1 to 20 %, or, from 2 to 15 %, or, from 3.97 to 11.17 % of the total number of nitrogen functional groups of the activated carbon.

In some examples of the present invention, the activated carbon comprises nitrogen in the form of pyridone and/or pyrrole, wherein the nitrogen in the form of pyridone and/or pyrrole is present at a concentration of from 5 to 30 %, or, from 10 to 25 %, or, from 15 to 20 %, or, from 17.85 to 19.24 % of the total number of nitrogen functional groups of the activated carbon.

In some examples of the present invention, the activated carbon comprises nitrogen in the form of quaternary-nitrogen, wherein the nitrogen in the form of quaternary-nitrogen is present at a concentration of from 10 to 35 %, or, from 15 to 30 %, or, from 20 to 25 %, or, from 20.75 to 23.96 % of the total number of nitrogen functional groups of the activated carbon.

In some examples of the present invention, the activated carbon comprises nitrogen in the form of pyridine-N-oxide, wherein the nitrogen in the form of pyridine-N-oxide is present at a concentration of from 1 to 30 %, or, from 5 to 25 %, or, from 7 to 20 %, or, from 9.54 to 19.99 % of the total number of nitrogen functional groups of the activated carbon.

In some examples of the present invention, the activated carbon comprises nitrogen in the form of nitrogen oxides ($NO_x$), wherein the nitrogen in the form of nitrogen oxides ($NO_x$) is present at a concentration of from 5 to 25 %, or, from 10 to 20 %, or, from 12 to 17 %, or, from 13.27 to 15.97 % of the total number of nitrogen functional groups of the activated carbon.

In some examples of the present invention, the surface of the activated carbon comprises nitrogen, wherein the concentration of nitrogen present on the surface of the activated carbon is from 0.1 to 2 %, or, from 0.2 to 1.7 %, or, from 0.5 to 1.5 %, or, from 0.74 to 1.38 % of the total number of elements on the surface of the activated carbon. Optionally, wherein the surface of the activated carbon is a layer adjacent the air-activated carbon interface having a thickness of 10 nm.

In some examples of the present invention, the surface of the activated carbon comprises nitrogen, wherein the nitrogen is in the form of one or more of pyridine, amine, pyridone, pyrrole, quaternary-nitrogen, pyridine-N-oxide and/or nitrogen oxides ($NO_x$). Optionally, wherein the surface of the activated carbon is a layer adjacent the air-activated carbon interface having a thickness of 10 nm.

In some examples of the present invention, the surface of the activated carbon comprises nitrogen in the form of pyridine, wherein the concentration of nitrogen in the form of pyridine present on the surface of the activated carbon is from 0.10 to 0.50 %, or, from 0.20 to 0.40 %, or, from 0.23 to 0.36 % of the total number of elements on the surface of the activated carbon. Optionally, wherein the surface of the activated carbon is a layer adjacent the air-activated carbon interface having a thickness of 10 nm.

In some examples of the present invention, the surface of the activated carbon comprises nitrogen in the form of amine, wherein the concentration of nitrogen in the form of amines present on the surface of the activated carbon is from 0.01 to 0.20 %, or, from 0.03 to 0.17 %, or, from 0.05 to 0.15 % of the total number of elements on the surface of the activated carbon. Optionally, wherein the surface of the activated carbon is a layer adjacent the air-activated carbon interface having a thickness of 10 nm.

In some examples of the present invention, the surface of the activated carbon comprises nitrogen in the form of pyridone and/or pyrrole, wherein the concentration of nitrogen in the form of pyridone and/or pyrrole present on the surface of the activated carbon is from 0.10 to 0.50 %, or, from 0.20 to 0.30 %, or, from 0.25 to 0.26 % of the total number of elements on the surface of the activated carbon. Optionally, wherein the surface of the activated carbon is a layer adjacent the air-activated carbon interface having a thickness of 10 nm.

In some examples of the present invention, the surface of the activated carbon comprises nitrogen in the form of quaternary-nitrogen wherein the concentration of nitrogen in the form of quaternary-nitrogen present on the surface of the activated carbon is from 0.10 to 0.50 %, or, from 0.20 to 0.40 %, or, from 0.29 to 0.32 % of the total number of elements on the surface of the activated carbon. Optionally, wherein the surface of the activated carbon is a layer adjacent the air-activated carbon interface having a thickness of 10 nm.

In some examples of the present invention, the surface of the activated carbon comprises nitrogen in the form of pyridine-N-oxide, wherein the concentration of nitrogen in the form of pyridine-N-oxide present on the surface of the activated carbon is from 0.05 to 0.50 %, or, from 0.75 to 0.30 %, or, from 0.13 to 0.28 % of the total number of elements on the surface of the activated carbon. Optionally, wherein the surface of the activated carbon is a layer adjacent the air-activated carbon interface having a thickness of 10 nm.

In some examples of the present invention, the surface of the activated carbon comprises nitrogen in the form of nitrogen oxides ($NO_x$), wherein the concentration of nitrogen in the form of nitrogen oxides ($NO_x$) present on the surface of the activated carbon is from 0.05 to 0.50 %, or, from 0.75 to 0.30 %, or, from 0.18 to 0.21 % of the total number of elements on the surface of the activated carbon. Optionally, wherein the surface of the activated carbon is a layer adjacent the air-activated carbon interface having a thickness of 10 nm.

In some examples of the present invention, the activated carbon comprises carbon, wherein the carbon is present at from 80 to 90 mass %, or, from 80 to 95 mass %, or, from 85 to 90 mass %, or, from 85.09 to 87.99 mass % of the total mass of the activated carbon.

In some examples of the present invention, the surface of the activated carbon comprises carbon, wherein the concentration of carbon present on the surface of the activated carbon is from 75 to 95 %, or, from 80 to 95 %, or, from 90 to 95 %, or, from 91.5 to 92.5 %, or, from 91.53 to 92.47 % of the total number of elements on the surface of the activated carbon. Optionally, wherein the surface of the activated carbon is a layer adjacent the air-activated carbon interface having a thickness of 10 nm.

In some examples of the present invention, the activated carbon has a moisture content of from 0.1 to 2.9 mass % of the total mass of the activated carbon. Preferably, the activated carbon has a moisture content of from 0.5 to 2 mass %, or, from 0.8 to 1.3 mass % of the total mass of the activated carbon. Preferably, when the activated carbon is in the form of a powder or a pellet, the activated carbon has a moisture content of from 0.8 to 1.3 mass % of the total mass of the activated carbon.

In some examples of the present invention, the activated carbon has an ash content of from 1 to 11 mass % of the total mass of the activated carbon. Preferably, the activated carbon has an ash content of from 2 to 10 mass %, or, from 3 to 7 mass %, or, 4 mass % of the total mass of the activated carbon. Preferably, when the activated carbon is in the form of a powder or a pellet, the activated carbon has an ash content of 4 mass % of the total mass of the activated carbon.

In some examples of the present invention, the activated carbon has an iodine number of from 500 to 1500 mg/g of activated carbon. Preferably, the activated carbon has an iodine number of from 750 to 1250, or, from 800 to 1200, or, from 882 to 1168 mg/g of activated carbon. Preferably, when the activated carbon is in the form of a powder or a pellet, the activated carbon has an iodine number of from 882 to 1168 mg/g of activated carbon.

In some examples of the present invention, the activated carbon has a methylene blue number of from 5 to 25 g/100g of the activated carbon. Preferably, the activated carbon has a methylene blue number of from 7.5 to 22.5, or, from 10.0 to 21.0, or, from 13.2 to 20.9 g/100g of the activated carbon. Preferably, when the activated carbon is in the form of a powder or a pellet, the activated carbon has a methylene blue number of from 13.2 to 20.9 g/100g of activated carbon.

In some examples of the present invention, the activated carbon has a pH of from 7.5 to 15.0. Preferably, the activated carbon has a pH of from 9 to 12.5, or, from 10.4 to 11.4. Preferably, when the activated carbon is in the form of a powder or a pellet, the activated carbon has a pH of from 10.4 to 11.4.

In some examples of the present invention, the activated carbon comprises a salt. Preferably, the salt is an inorganic salt. Preferably, the salt is a metallic salt, wherein the metal is from group one or group two of the periodic table. Preferably, the salt is a potassium, sodium, calcium and/or magnesium salt. Preferably, the salt is in the form of one or more of carbonates, chlorides, sulphates and/or nitrates. Preferably, the salt is one or more of carbonates, chlorides, sulphates and/or nitrates of potassium, sodium, calcium and/or magnesium.

In some examples of the present invention, the activated carbon comprises potassium. The potassium content is measured by any known method in the art, preferably XPS (x-ray photoelectron spectroscopy). Preferably, the activated carbon comprises potassium at a concentration of from 0.1 to 30 %, or, from 0.1 to 25 %, or, from 0.1 to 20 % of the total number of elements of the activated carbon.

In some examples of the present invention, the activated carbon is used in removal of one or more of endocrine-disrupting chemicals (EDC), pharmaceutically active compounds (PhAC), polycyclic aromatic hydrocarbons (PAH), perfluoroalkyl and/or polyfluoroalkyl substances (PFAS), chloramines, such as but not limited to monochloramines, siloxanes, hydrogen sulphide ($H_2S$), sulphur oxides ($SO_x$) and/or nitrogen oxides ($NO_x$) from a fluid. Optionally, wherein the fluid is a liquid or a gas, optionally, wherein the fluid is an aqueous liquid.

Advantageously, activated carbon according to the present invention is effective in purifying various substances. Advantageously, activated carbon according to the present invention effectively removes pollutants such as, but not limited to, organic micropollutants, pesticides and/or arsenic from fluids such as, but not limited to, wastewater and/or drinking water. Activated carbon can be used as a pollutant removal agent in beverage dichlorination, pre-treatment for ultrafiltration, reverse osmosis membranes and soil remediation by extracting polycyclic aromatic hydrocarbons (PAH) and/or perfluoroalkyl and/or polyfluoroalkyl substances (PFAS).

Further advantageously, activated carbon according to the present invention can be used for refining fluids such as, but not limited to, edible oils, stearin, amino acids, acids and/or agrochemicals.

Further advantageously, activated carbon according to the present invention is effective in obtaining glycerine from biodiesel production for pharmaceutical, food, and/or cosmetic use.

Further advantageously, activated carbon according to the present invention can be used in the removal of pollutants such as, but not limited to, mercaptans, dioxins, furans, and/or mercury from fluids so that the resultant fluid complies with environmental regulations.

Further advantageously, activated carbon according to the present invention can be used in the oil and/or gas sector. For example, activated carbon according to the present invention can be used to purify amine and/or glycol solutions that are used in washing systems used in oil and/or gas sector. For a further example, activated carbon according to the present invention can be used to remove hydrogen sulfide from fluids such as, but not limited to, gas streams.

Further advantageously, activated carbon according to the present invention can be used in the treatment of fluids such as, but not limited to, gases formed in hydrocracking reactors. The use of the activated carbon according to the present invention advantageously prevents the formation of heavy polynuclear aromatics, thereby prolonging the use of any amines and glycols used in the hydrocracking reactors.

Method of making the activated carbon

In some examples of the present invention, the activated carbon is produced by a method that comprises the following steps:

(a) providing a carbonaceous precursor;
(b) pyrolysing the carbonaceous precursor to form a carbonised product;
(c) mixing the carbonised product with a salt; and
(d) activating the carbonised product to form the activated carbon.

In some examples of the present invention, the carbonaceous precursor is MDF (medium-density fibreboard), particle board, chipboard, melamine (urea) formaldehyde, polyacrylonitrile (PAN), grain products, fruit pits, palm fronds, nutshells, wood, coconut shell, peat, coir, lignite, coal, petroleum pitch and/or mixtures thereof. Preferably, the carbonaceous precursor is MDF.

In some examples of the present invention, the carbonaceous precursor undergoes pyrolysis by being subjected to heat in the absence of oxygen. Optionally, the carbonaceous precursor undergoes pyrolysis in a furnace. Optionally, the temperature of the heat is at least 500 °C, or, from 500 to 1100 °C, or, from 600 to 800 °C, or, at 750 °C. Optionally, the time of pyrolysis is from 10 to 120 minutes, or, from 15 to 60 minutes, or, from 20 to 40 minutes, or, 30 minutes. Preferably, the temperature of the heat is 750 °C and the time of pyrolysis is 30 minutes.

During the pyrolysis, the carbonised product is formed.

In some examples of the present invention, the carbonised product is ground to form a powdered carbonised product.

In some examples of the present invention, the salt is an inorganic salt. Preferably, the salt is a metallic salt, wherein the metal is from group one or group two or the periodic table. Preferably, the salt is a potassium, sodium, calcium and/or magnesium salt. Preferably, the salt is in the form of one or more of carbonates, chlorides, sulphates and/or nitrates. Preferably, the salt is one or more of carbonates, chlorides, sulphates and/or nitrates of potassium, sodium, calcium and/or magnesium. salt. Preferably, the salt is potassium carbonate, potassium sulfate and/or potassium chloride. Preferably, a sufficient amount of the salt is added to the carbonised product or powdered carbonised product so that the activated carbon has a salt content of from 0.1 to 30 %, or, from 0.1 to 25 %, or, from 0.1 to 20 % of the total number of elements of the activated carbon. Preferably, a sufficient amount of the salt, wherein the salt is a potassium salt, is added to the carbonised product or powdered carbonised product so that the activated carbon has a potassium content at a concentration of from 0.1 to 30 %, or, from 0.1 to 25 %, or, from 0.1 to 20 % of the total number of elements of the activated carbon.

In some examples of the present invention, the powdered carbonised product is extruded to form an extruded carbonised product, wherein the extrusion comprises the following steps:

(i) mixing the powdered carbonised product with a binder and water to form a mixture;
(ii) extruding the mixture through a pelletiser to form an extruded pellet;
(iii) baking the extruded pellet to form a baked extruded pellet, wherein the extruded pellet is baked for from 10 to 120 minutes, or, from 15 to 60 minutes, or, from 20 to 40 minutes, or, 30 minutes until a final temperature of from 200 to 500 °C, or, from 250 to 450 °C, or, from 300 to 400 °C, or, 350 °C is achieved; and
(iv) baking the baked extruded pellet to form an extruded carbonised product, wherein the baked extruded pellet is baked for from 10 to 120 minutes, or, from 15 to 60 minutes, or, from 20 to 40 minutes, or, 30 minutes until a final temperature of from 450 to 750 °C, or, from 500 to 700 °C, or, from 550 to 650 °C, or, 600 °C is achieved.

In some examples, the ratio of binder to water to powdered carbonised product (binder: water: powdered carbonised product) is 1:1:3.33.

In some examples of the present invention, the binder is lignin-based and/or tar, optionally wherein the binder is one or more of ammonium lignosulfonate, calcium lignosulfonate and/or sodium lignosulfonate. Preferably, the binder is ammonium lignosulfonate.

Preferably, the extruded pellet is baked for 30 minutes until a final temperature of from 350 °C is achieved and the baked extruded pellet is baked for 30 minutes until a final temperature of 600 °C is achieved.

In some examples of the present invention, the carbonised product, powdered carbonised product and/or extruded carbonised product is activated. Optionally, the carbonised product, powdered carbonised product and/or extruded carbonised product are activated in a furnace.

In some examples of the present invention, the carbonised product, powdered carbonised product and/or extruded carbonised product is activated at a temperature of at least 800 °C, or, at least 900 °C, or, at least 950 °C, or, from 800 to 1100 °C, or, from 900 to 1000 °C, or, at 950 °C.

In some examples of the present invention, the carbonised product, powdered carbonised product and/or extruded carbonised product is activated for from 10 to 120 minutes, or, from 15 to 60 minutes, or, from 20 to 40 minutes, or, 30 minutes.

In some examples of the present invention, the carbonised product, powdered carbonised product and/or extruded carbonised product is exposed to steam during activation, wherein the ratio of steam to the carbonised product is from 1:50 to 1:1, or, from 1:30 to 1:20, or, 1:25; optionally, wherein the steam is water.

Preferably, the carbonised product, powdered carbonised product and/or extruded carbonised product is activated at a temperature of 950 °C, for 30 minutes and activation occurs in the presence of steam wherein the ratio of steam to the mixture is from 1:25.

During the activation, the activated carbon is formed.

In some examples of the present invention, the activated carbon is additionally exposed to an oxidizing gas during activation. The oxidizing gas may be carbon monoxide (CO) and/or carbon dioxide ($CO_2$).

In some examples of the present invention, the activated carbon is further processed to form the activated carbon is in a granular, powdered and/or pelletised form.

Uses of the activated carbon

In some examples, the activated carbon is used in the removal of pollutants from a fluid.

In some examples, the pollutant is endocrine disrupting chemicals (EDC), pharmaceutical active compounds (PhAC), polycyclic aromatic hydrocarbons (PAH), perfluoroalkyl and polyfluoroalkyl substances (PFAS), chloramines, siloxanes and acidic gases such as hydrogen sulphide ($H_2S$), sulphur oxides ($SO_x$) and/or nitrogen oxides ($NO_X$).

In some examples, the fluid may be water, oil spills, industrial effluents and combustion gases.

EXAMPLES

The following are non-limiting examples that discuss, with reference to tables, the advantages of the present invention. The examples set forth herein are merely examples among other possible examples.

Example 1: Forming activated carbon in a powdered form

In this non-limiting example, four powdered activated carbon (PAC) samples according to the present invention were formed.

In this non-limiting example, the PAC samples were formed from MDF. The MDF was sourced from Homanit GmbH.

All of the PAC samples were produced separately by the same process. The process of producing the PAC samples is set out below:

1. The MDF was placed in an oven and heated at 750 °C for 30 minutes. Any oven can be used. In this non-limiting example, a Nabertherm rotary oven was used (model RSRC 120 1000/11). During the heating, the carbonaceous precursor underwent pyrolysis to form carbonised char flakes.

2. The carbonised char flakes were milled in a grinder to form a powdered carbonised product. Any grinder can be used. In this non-limiting example, a grinder from JM machines custom converted from a shredder machine type AM2018/200 was used.

3. The powdered carbonised product was then combined with potassium carbonate. The potassium carbonate was sourced from Carl Roth. In one example, the amount of potassium carbonate combined with the powdered carbonised product was 1 mass % of the total mass of the powdered carbonised product. Alternatively, the amount of potassium carbonate combined with the powdered carbonised product was from 0.5 to 5 mass % of the total mass of the powdered carbonised product. The amount of potassium carbonate combined with the powdered carbonised product was sufficient so that the formed powdered activated carbon (PAC) has a potassium content of 1 % of the total number of elements of the formed powdered activated carbon (PAC). Optionally, the potassium content of 1 % of the total number of elements of the formed powdered activated carbon (PAC) was measured by XPS.

4. The powdered carbonised product was placed in an oven and heated at 950 °C in the presence of steam for 30 minutes, wherein the ratio of powdered carbonised product to steam was 1:25. During heating, the powdered carbonised product underwent activation to form powdered activated carbon (PAC). Any oven can be used. In this non-limiting example, a Nabertherm rotary oven was used (model RSRC 120 1000/11).

The process was repeated twice to form two powdered activated carbon samples. The two powdered activated carbon formed in this example are called PAC1 and PAC2 hereinafter.

Example 2: Forming activated carbon in an extruded form

In this non-limiting example, an extrudate activated carbon (EAC) sample according to the present invention was formed.

In this non-limiting example, the EAC samples was formed from MDF. The MDF was sourced from Homanit GmbH.

The process of producing the EAC sample is set out below:

1. The MDF was placed in an oven and heated at 750 °C for 30 minutes. Any oven can be used. In this non-limiting example, a Nabertherm rotary oven was used (model RSRC 120 1000/11). During the heating, the carbonaceous precursor underwent pyrolysis to form carbonised char flakes.

2. The carbonised char flakes milled in a grinder to form a powdered carbonised product. Any grinder can be used. In this non-limiting example, a grinder from JM machines custom converted from a shredder machine type AM2018/200 was used.

3. The powdered carbonised product was then combined with potassium carbonate. The potassium carbonate was sourced from Carl Roth. In one example, the amount of potassium carbonate combined with the powdered carbonised product was 1 mass % of the total mass of the powdered carbonised product. Alternatively, the amount of potassium carbonate combined with the powdered carbonised product was from 0.5 to 5 mass % of the total mass of the powdered carbonised product. The amount of potassium carbonate combined with the powdered carbonised product was sufficient so that the formed extruded activated carbon (EAC) has a potassium content of 1 % of the total number of elements of the formed extruded activated carbon (EAC). Optionally, the potassium content of 1 % of the total number of elements of the formed extruded activated carbon (EAC) was measured by XPS.

4. The powdered carbonised product was mixed in a mixer with ammonium lignosulfonate (a binder) and water to form a mixture. The mixture was made from 30 g of binder and 30 g of water for every 100 g of powdered carbonised product. Any mixer can be used. In this non-limiting example, a mixer from DOMO was used. Mixing was performed until a uniform mixture was formed.

5. The mixture was extruded through a pelletiser to form an extruded pellet. Any pelletiser can be used. In this non-limiting example, a flat die pellet mill (KL 120C with 4 mm diameter mold) was used.

6. The extruded pellet was placed in an oven and heated for 30 minutes until a final temperature of 350 °C was achieved. At the end of the heating step, a baked extruded pellet was formed. Any oven can be used. In this non-limiting example, a Nabertherm rotary oven was used (model RSRC 120 1000/11).

7. The baked extruded pellet was retained in the oven and further heated for 30 minutes until a final temperature of 600 °C was achieved. At the end of the heating step, an extruded carbonised product was formed. Any oven can be used. In this non-limiting example, a Nabertherm rotary oven was used (model RSRC 120 1000/11).

8. The extruded carbonised product was retained in the oven and further heated at 950 °C in the presence of steam for 30 minutes, wherein the ratio of extruded carbonised product to steam was 1:25. During heating, the extruded carbonised product underwent activation to form activated carbon. Any oven can be used. In this non-limiting example, a Nabertherm rotary oven was used (model RSRC 120 1000/11).

9. The activated carbon underwent pelletisation to form extruded activated carbon (EAC). Any pelletiser can be used. In this non-limiting example, a flat die pellet mill (KL 120C with 4 mm diameter mold) was used.

Example 3: Physical characterisation of the activated carbon

In this non-limiting example, the moisture content, ash content, iodine number, methylene blue number and gas adsorption (with argon and nitrogen) and porosity of PAC1 and PAC2 was measured.

In addition, the moisture content, ash content, iodine number, methylene blue number and gas adsorption (with argon and nitrogen) and porosity of a comparative PAC sample was measured. The comparative sample is called PAC-A hereinafter. PAC-A was sourced from Cabot Norit (sample NORIT SAE Super). PAC-A is a mesoporous material.

*Measuring moisture content*

To measure the moisture content of activated carbon, the weight of a dry cup or crucible was measured. A sample of the activated carbon was then placed inside the dry cup or crucible and the weight of the activated carbon and dry cup or crucible measured. The cup or crucible (along with the activated carbon sample) was placed in a preheated oven without a lid. The sample was dried until the cup or crucible (along with the activated carbon) maintained a constant weight despite continued heating in the oven. The cup or crucible (along with the activated carbon) was then cooled to room temperature in a desiccator. The crucible or cup (along with the activated carbon) was weighed again. The moisture content is the percentage of weight loss compared to the original sample.

*Measuring ash content*

To measure ash content, the weight of a dry cup or crucible was measured. A sample of the activated carbon was then placed inside the dry cup or crucible and the weight of the activated carbon and dry cup or crucible measured. The cup or crucible (along with the activated carbon sample) was placed in a temperaturecontrolled muffle furnace until the sample was completely burnt to form a completely burnt sample. The completely burnt sample contained non-combustible inorganic residue. The completely burnt sample stayed in the muffle furnace until a constant weight was maintained despite the completely burnt sample remaining in the muffle furnace. The cup or crucible (along with the completely burnt sample) was then cooled to room temperature in a desiccator. The crucible or cup (along with the completely burnt sample) was weighed again. The ash content is the percentage of weight loss compared to the original sample.

*Measuring iodine number (IN)*

To measure the iodine number, a test based on the determination of a three-point absorption isothermal of iodine and the specific activated carbon was used.

To measure the iodine number (IN), a standard iodine solution was brought into contact with three different masses of activated carbon according to ASTM D4607-94 to form three activated carbon solutions. The method applied in accordance with the present invention used a molar ratio of potassium iodine to iodine of 3:1, whilst the method in ASTM D4607-94 used a ratio of potassium iodine to iodine of 2:1 otherwise the method followed in the present invention is the same as that in ASTM D4607-94. Once the method from ASTM D4607-94 had been followed, the three activated carbon solutions were then filtered separately to separate the activated carbon from the solution. The residual iodine concentration of the solution was then determined for each solution by titration. From the data obtained by the titration, the amount of iodine (in milligrams) removed per gram of carbon was determined for each activated carbon sample used, and the data was plotted in an absorption isotherm.

The amount of adsorbed iodine (in milligrams) per gram of carbon at a residual iodine concentration of 0.02 N is reported as the iodine number (IN).

*Measuring methylene blue number (MBN)*

To measure the methylene blue number (MBN), the volume of standardised methylene blue solution that was decolourised after ten minutes by 0.1 g of dried activated carbon was measured. The absorbance of the methylene blue solution was measured at an absorbance of 0.100 at a wavelength of 620 nm in a 1 cm quartz cuvette. The methylene blue solution was filtered through a 0.45 $\mu$m membrane prior to the measurement.

*Measuring Brunauer-Emmett-Teller (BET) specific surface area (argon)*

The BET specific surface area (with argon used as the inert gas) was measured according to the ISO 9277:2010.1. The BET specific surface area was measured by measuring the adsorption of the activated carbon samples at 77 K on a Quantachrome Autosorb IQ. A relative pressure range of from $p/p_0 = 0.01$ to $p/p_0 = 0.30$ was used.

Prior to the measurements, the sample cell of the Quantachrome Autosorb IQ was pre-treated at a temperature of 130 °C in a vacuum for sixteen hours.

*Measuring Brunauer-Emmett-Teller (BET) specific surface area (nitrogen)*

The BET specific surface area (with nitrogen used as the inert gas) was measured according to the ISO 9277:22. The BET specific surface area was measured on a micromeritics ASAP2010 gas adsorption analyser equipped with additional 1 mmHg and 10 mmHg pressure transducers. A relative pressure range of from $p/p_0 = 10\text{-}7$ to 0.99 was used.

Prior to the measurements, the sample cell of the analyser was pre-treated at a temperature of 130 °C in a vacuum for sixteen hours.

*Measuring the pH of water upon contact with the activated carbon*

The pH of water upon contact with activated carbon was measured with a procedure adapted from ASTM D6851. The procedure combined a 10 g of the activated carbon with 100 ml of demineralised water in a 250 ml container to form a suspension. The suspension was stirred gently for 10 minutes. A parallel blank test was conducted under identical conditions. Upon completion of the stirring, the pH of the suspension was measured.

The experiment was repeated three times and the results taken as the average water pH and the mean contact pH, including the standard deviation to reflect variability. The values in Table 1 are the average water pH.

*Results of the measurements*

Table 1 sets out the results of the physical characterisation of PAC1, PAC2 and PAC-A.

The data for PAC-A, the comparative example, was obtained from a paper published by D Dittmann et al. "Characterization of activated carbons for water treatment using TGA-FTIR for analysis of oxygen-containing functional groups" published in Applied Water Science (15 July 2022) (doi: org/10.1007/s13201-022-01723-2), the disclosure of which is hereby incorporated by reference in its entirety.

Table 1: Physical characterisation of PAC1. PAC2 and PAC-A (AC stands for activated carbon in Table 1).

| Sample | Moisture content (%m/m) | Ash content (%m/m) | IN (mg/g AC) | MBN (g/100 g AC) | pH | BET (nitrogen) (m²/g) | BET (argon) (m²/g) |
|---|---|---|---|---|---|---|---|
| *Activated carbon according to the present invention* | | | | | | | |
| PAC1 | 0.8 | 4.0 | 1168 | 20.9 | 10.4 | 1024 | 1048 |
| PAC2 | 1.3 | 4.0 | 882 | 13.2 | 11.4 | 945 | 923 |
| *Comparative example* | | | | | | | |
| PAC-A | 3.0 | 12.0 | 1123 | 20.2 | 11.0 | 1182 | / |

Example 4: Porosity of the activated carbon

In this non-limiting example, the porosity of PAC1, PAC2 and PAC-A was measured.

To measure the porosity of the activated carbon, the activated carbon was firstly degassed at a temperature of 130 °C in a vacuum for sixteen hours. The intrusion and extrusion curves were then recorded on a micromeritics autopore 9505 analyser at a pressure range of from 0.002 to 220 MPa (in accordance with DIN 66133 (obsolete and replaced by ISO 15901-1:2016)8).

The results are shown in Table 2.

Table 2: The porosity of PAC1, PAC2 and PAC-A.

| Sample | PAC1 | PAC2 | PAC-A |
|---|---|---|---|
| Total pore volume (ml/g) | 0.624 | 0.526 | 0.950 |
| Total volume of micropores (ml/g) | 0.291 | 0.254 | 0.140 |
| Total volume of mesopores (ml/g) | 0.333 | 0.272 | 0.810 |
| Percentage of mesopores of total pores (%) | 53.4 | 51.7 | 85.0 |

Advantageously, activated carbon comprising hierarchical pore structure (i.e., activated carbon having pore sizes of different sizes such as a combination or micropores, mesopores and/or macropores) is desirable because the multiple available pore sizes provide ideal space for the adsorption of multiple size adsorbates.

Example 5: Chemical characterisation of the activated carbon

In this non-limiting example, the carbon and nitrogen content of PAC1, PAC2 and PAC-A was measured.

*Measuring the nitrogen content and carbon content via CHNS/O combustion*

Prior to the CHNS-O measurements, the samples were milled with a mortar and pestle to a fine powder and dried at 130 °C for sixteen hours. The quantitative determination of the nitrogen, carbon hydrogen and sulphur mass percent of the activated carbon was performed using a FlashEA 1112 CHNS/O automatic element analyser. The oxygen mass percent of the activated carbon was performed using the FlashEA 1112 CHNS/O automatic element analyser in a separate assessment.
The experiment was duplicated to ensure accuracy of results.

*Measuring the nitrogen N 1s and carbon C 1s content via XPS (x-ray photoelectron spectroscopy)*

In this non-limiting example, the concentration of the nitrogen and the concentration of the carbon relative to the total number of elements on the surface of the activated carbon was determined. The surface of the activated carbon was a layer adjacent the air-activated carbon interface having a thickness of 10 nm. The concentration of nitrogen relative to the total number of elements at the surface of the activated carbon was called N 1s and the concentration of carbon relative to the total number of elements at the surface of the active carbon was called C 1s.
To measure the nitrogen and carbon content of the activated carbon, XPS was used. Prior to the XPS measurements, the samples were milled with a mortar and pestle to a fine powder XPS measurements were then conducted on a k-alpha XPS apparatus from Thermo Scientific (400 $\mu$m spot size). The XPS had a monochromatic X-ray source with an energy of 1486.68 eV (Al K$\alpha$).
When running the measurements, the base pressure inside the chamber of the XPS was at 10 to 8 mbar (ultra-high vacuum (UHV) conditions). Survey scans with a pass energy of 200 eV and narrow (high resolution) elemental scans with a pass energy of 50 eV were performed for the C 1s and N 1s regions. All spectra were calibrated based on the C 1s C=C peak at a binding energy of 284.5 eV. All spectra were processed using the Casa XPS software version 2.3.25PR1.0 by using a Shirly background. The C=C peak was fitted with an asymmetric line shape (Doniach-Sunjic model) and a full-width half maximum (FWHM) of 0.6 to 1.0 eV. The rest of the C 1s and N 1s features were constrained with a symmetric line shape (Gaussian-Lorentzian mixture; GL(30)), and a full-width half maximum (FWHM) of 1.4-1.6 eV.

*Results of the measurements*

Tables 3 and 4 set out the results of the chemical characterisation of PAC1, PAC2 and PAC-A.

Table 3: Chemical characterisation of PAC1, PAC2 and PAC-A.

| Sample | PAC1 | PAC2 | PAC-A |
|---|---|---|---|
| Nitrogen content (m/m %) | 1.37 | 1.33 | / |
| Carbon content (m/m %) | 87.99 | 85.09 | 79.03 |
| Nitrogen N 1s content (%) | 1.38 | 0.74 | / |
| Carbon C 1s content (%) | 91.53 | 92.47 | 72.7 |
| Pyridine content N 1s (%) | 0.23 | 0.36 | / |
| Amine content N 1s (%) | 0.15 | 0.05 | / |
| Pyridone and/or pyrrole N 1s (%) | 0.25 | 0.26 | / |
| Quaternary-nitrogen N 1s (%) | 0.29 | 0.32 | / |
| Pyridine-N-oxide N 1s (%) | 0.28 | 0.13 | / |
| Nitrogen oxides N 1s (%) | 0.18 | 0.21 | / |

Table 4: The concentration of nitrogen in the form of different nitrogen containing functional groups with regard to the total number of nitrogen functional groups of the activated carbon.

| Sample | PAC1 | PAC2 | PAC-A |
|---|---|---|---|
| Pyridine content N 1s (%) | 16.96 | 27.32 | / |
| Amine content N 1s (%) | 11.17 | 3.97 | / |
| Pyridone and/or pyrrole N 1s (%) | 17.85 | 19.24 | / |
| Quaternary-nitrogen N 1s (%) | 20.75 | 23.96 | / |
| Pyridine-N-oxide N 1s (%) | 19.99 | 9.54 | / |
| Nitrogen oxides N 1s (%) | 13.27 | 15.97 | / |

Example 6: Use of the activated carbon in the removal of endocrine disrupting compounds and from waste water

In this non-limiting example, the removal efficiency of PAC1 and PAC-A were analysed for five endocrine disrupting compounds (EDC) and pharmaceutically active compounds (PhAC). The five endocrine disrupting compounds (EDC) and pharmaceutically active compounds (PhAC) were paracetamol, diclofenac sodium salt, sulfamethoxazole, ibuprofen, and irbesartan.

In this non-limiting example, water was chemically modified to represent realistic wastewater conditions. The water made had the following chemical composition: NaHCOs 65.7 mg/l, KC! 5.75 mg/l, $CaCl_2.2H_2O$ 294 mg/l, $MgSO_4.7H_2O$ 123 mg/l.

To measure the removal efficiency of the PAC samples, solutions of 200 mg/L of each EDC/PhAC were prepared separately in the chemically modified water. Then 30 ml of each solution was added to 20 mg of the PAC samples in a bottle with a screw cap and the pH of all solutions was adjusted to 7. The mixture was then placed on a shaking table (frequency 55%) for 24 hours at a temperature of 25 °C.

Once 24 hours had passed, residual concentrations were measured using a spectrophotometer and the removal efficiency was calculated as follows:

$$\text{removal efficiency (\%)} = \frac{(C_0 - C_{end})}{C_0} \times 100$$

where $C_o$ (mg/L) is the initial EDC/PhAC concentration and $C_{end}$ (mg/mL) the residual concentration.

The results of the measurement are shown in Table 5. In Table 5, the adsorption capacity as $\mu g/mg$ and removal efficiency as % are shown.

Table 5: The adsorption capacity removal efficiency of PAC1 and PAC-A was analysed for five endocrine disrupting compounds (EDC) and pharmaceutically active compounds (PhAC).

| Sample | | PAC1 | PAC-A |
|---|---|---|---|
| Paracetamol | Adsorption capacity | 247.5 | 258.9 |
| | Removal efficiency | 77.1 | 777.6 |
| Diclofenac sodium salt | Adsorption capacity | 351.8 | 352.7 |
| | Removal efficiency | 99.9 | 97.7 |
| Sulfamethoxazole | Adsorption capacity | 243.0 | 224.3 |
| | Removal efficiency | 71.7 | 67.2 |
| Ibuprofen | Adsorption capacity | 239.4 | 246.0 |
| | Removal efficiency | 73.4 | 73.1 |
| Irbesartan | Adsorption capacity | 277.9 | 286.5 |
| | Removal efficiency | 85.5 | 83.6 |
| Total removal efficiency (%) | | 81.5 | 79.7 |

Table 5 shows that PAC1 has a high removal efficiency of the endocrine disrupting compounds (EDC) and pharmaceutically active compounds (PhAC). This is likely due to the high volume of mesopores in PAC1 and the surface chemistry of PAC1.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilized for realizing the invention in diverse forms thereof.

Although certain example aspects of the invention have been described, the scope of the appended claims is not intended to be limited solely to these examples. The claims are to be construed literally, purposively, and/or to encompass equivalents.

**Claims**

1. Activated carbon, the surface of the activated carbon comprising pores, wherein 45 % or greater of the total volume of pores are mesoporous pores.

2. The activated carbon of claim 1, wherein from 45 to 84 %, or, from 45 to 70 %, or, from 50 to 60 %, or, from 45 to 58 %, or, from 50 to 58 %, or, from 51 to 55 %, or, from 51.7 to 53.4 % of the total volume of pores are mesoporous pores; and/or,

   wherein the mesoporous pores have a diameter of from 2 to 50 nm; and/or,
   where the activated carbon has a total pore volume of from 0.84 ml/g or less, or, from 0.80 ml/g or less, or, from 0.75 ml/g or less, or, from 0.70 ml/g or less, or, from 0.65 ml/g or less, or, from 0.45 to 0.70 ml/g, or, from 0.50 to 0.65 ml/g, or, from 0.526 to 0.624 ml/g; and/or,
   wherein the activated carbon has a Brunauer-Emmett-Teller (BET) specific surface area accessible to nitrogen of from 600 to 1150 $m^2$/g, or, from 700 to 1150 $m^2$/g, or, from 750 to 1150 $m^2$/g, or, from 800 to 1150 $m^2$/g, or, from 900 to 1150 $m^2$/g, or, from 900 to 1050 $m^2$/g, or, from 945 to 1024 $m^2$/g.

3. The activated carbon of claim 1 or claim 2, wherein the activated carbon comprises nitrogen, wherein the nitrogen is present at from 1.1 to 2.1 mass %, or, from 1.1 to 2.0 mass %, or, from 1.1 to 1.8 mass %, or, from 1.1 to 1.6 mass %, or, from 1.2 to 1.5 mass %, or, from 1.3 to 1.4 mass %, or, from 1.33 to 1.37 mass % of the total mass of the activated carbon; optionally,
   wherein the activated carbon comprises nitrogen, wherein the nitrogen is present in the form of one or more of pyridine, amine, pyridone, pyrrole, quaternary-nitrogen, pyridine-N-oxide and/or nitrogen oxides ($NO_x$).

4. The activated carbon of any one of claims 1 to 3, wherein the surface of the activated carbon comprises nitrogen, wherein the concentration of nitrogen present on the surface of the activated carbon is from 0.1 to 2 %, or, from 0.2 to 1.7 %, or, from 0.5 to 1.5 %, or, from 0.74 to 1.38 % of the total number of elements on the surface of the activated carbon; optionally,

   wherein the surface of the activated carbon is a layer adjacent the air-activated carbon interface having a thickness of 10 nm; and/or,
   wherein the surface of the activated carbon comprises nitrogen, wherein the nitrogen is in the form of one or more of pyridine, amine, pyridone, pyrrole, quaternary-nitrogen, pyridine-N-oxide and/or nitrogen oxides ($NO_x$).

5. The activated carbon of any one of claims 1 to 4, wherein the activated carbon comprises carbon, wherein the carbon is present at from 80 to 90 mass %, or, from 80 to 95 mass %, or, from 85 to 90 mass %, or, from 85.09 to 87.99 mass % of the total mass of the activated carbon.

6. The activated carbon of any one of claims 1 to 5, wherein the surface of the activated carbon comprises carbon, wherein the concentration of carbon present on the surface of the activated carbon is from 75 to 95 %, or, from 80 to 95 %, or, from 90 to 95 %, or, from 91.5 to 92.5 %, or, from 91.53 to 92.47 % of the total number of elements on the surface of the activated carbon; optionally,
   wherein the surface of the activated carbon is a layer adjacent the air-activated carbon interface having a thickness of 10 nm.

7. The activated carbon of any one of claims 1 to 6, wherein the activated carbon comprises potassium; optionally, wherein the activated carbon comprises potassium at a concentration of from 0.1 to 30 %, or, from 0.1 to 25 %, or, from 0.1 to 20 % of the total number of elements of the activated carbon; and/or,

wherein the activated carbon is in a granular, powdered and/or pelletised form.

8. The activated carbon of any one of claims 1 to 7, for use in removing one or more of endocrine-disrupting chemicals (EDC), pharmaceutically active compounds (PhAC), polycyclic aromatic hydrocarbons (PAH), perfluoroalkyl and/or polyfluoroalkyl substances (PFAS), chloramines, such as but not limited to monochloramines, siloxanes, hydrogen sulphide ($H_2S$), sulphur oxides ($SO_x$) and/or nitrogen oxides ($NO_x$) from a fluid; optionally, wherein the fluid is a liquid or a gas, optionally, wherein the fluid is an aqueous liquid.

9. A composition comprising:

   an activated carbon according to any one of claims 1 to 8; and
   a metallic salt; optionally,
   wherein the metal in the salt is from group one or group two of the periodic table; optionally, wherein the metal in the salt is potassium.

10. A method of forming the activated carbon of any one of claims 1 to 8, the method comprising the steps of:

    (a) providing a carbonaceous precursor;
    (b) pyrolysing the carbonaceous precursor to form a carbonised product;
    (c) mixing the carbonised product with a salt; and
    (d) activating the carbonised product to form the activated carbon.

11. The method of claim 10, wherein the carbonaceous precursor is medium-density fibreboard (MDF); and/or,

    wherein the carbonaceous precursor is pyrolysed at a temperature of at least 500 °C, or, from 500 to 1100 °C, or, from 600 to 800 °C, or, 750 °C; and/or,
    wherein the carbonaceous precursor is pyrolysed for from 10 to 120 minutes, or, from 15 to 60 minutes, or, from 20 to 40 minutes, or, 30 minutes; and/or,
    wherein the salt is a potassium salt; optionally, wherein the potassium salt is potassium carbonate, potassium sulfate and/or potassium chloride.

12. The method of claim 10 or claim 11, wherein the carbonised product is ground to form a powdered carbonised product; optionally,

    wherein the powdered carbonised product is extruded to form an extruded carbonised product, wherein the extrusion comprises the following steps:

       (i) mixing the powdered carbonised product with a binder and water to form a mixture;
       (ii) extruding the mixture through a pelletiser to form an extruded pellet;
       (iii) baking the extruded pellet to form a baked extruded pellet, wherein the extruded pellet is baked for from 10 to 120 minutes, or, from 15 to 60 minutes, or, from 20 to 40 minutes, or, 30 minutes until a final temperature of from 200 to 500 °C, or, from 250 to 450 °C, or, from 300 to 400 °C, or, 350 °C is achieved; and
       (iv) baking the baked extruded pellet to form an extruded carbonised product, wherein the baked extruded pellet is baked for from 10 to 120 minutes, or, from 15 to 60 minutes, or, from 20 to 40 minutes, or, 30 minutes until a final temperature of from 450 to 750 °C, or, from 500 to 700 °C, or, from 550 to 650 °C, or, 600 °C is achieved;
       optionally,

    wherein the binder is lignin-based and/or tar, optionally wherein the binder is one or more of ammonium lignosulfonate, calcium lignosulfonate and/or sodium lignosulfonate.

13. The method of any one of claims 10 to 12, wherein the carbonised product, powdered carbonised product and/or extruded carbonised product is activated at a temperature of at least 800 °C, or, at least 900 °C, or, at least 950 °C, or, from 800 to 1100 °C, or, from 900 to 1000 °C, or, at 950 °C; and/or,

    wherein the carbonised product, powdered carbonised product and/or extruded carbonised product is activated for from 10 to 120 minutes, or, from 15 to 60 minutes, or, from 20 to 40 minutes, or, 30 minutes; and/or,
    wherein the carbonised product, powdered carbonised product and/or extruded carbonised product is exposed to steam during activation, wherein the ratio of steam to the carbonised product is from 1:50 to 1:1, or, from 1:30 to 1:20, or, 1:25; optionally, wherein the steam is water; and/or,

wherein the activated carbon is in a granular, powdered and/or pelletised form.

14. Use of the activated carbon of any one of claims 1 to 8 in removing pollutants from a fluid; and/or,

in removing endocrine-disrupting chemicals (EDC) from a fluid; and/or,
in removing pharmaceutically active compounds (PhAC) from a fluid; and/or,
in removing polycyclic aromatic hydrocarbons (PAH) from a fluid; and/or,
in removing perfluoroalkyl and/or polyfluoroalkyl substances (PFAS) from a fluid; and/or,
in removing chloramines, such as but not limited to monochloramines, from a fluid; and/or,
in removing siloxanes from a fluid; and/or,
in removing hydrogen sulphide ($H_2S$), sulphur oxides ($SO_x$) and/or nitrogen oxides ($NO_x$) from a fluid.

15. Use of the activated carbon of claim 14, wherein the fluid is a liquid or a gas, optionally, wherein the fluid is an aqueous liquid.

## EUROPEAN SEARCH REPORT

**Application Number**

EP 24 16 7584

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WU YU ET AL: "Characteristics of nitrogen-enriched activated carbon prepared from waste medium density fiberboard by potassium hydroxide", JOURNAL OF WOOD SCIENCE, SPRINGER SINGAPORE, SINGAPORE, vol. 59, no. 2, 18 November 2012 (2012-11-18), pages 133-140, XP036681834, ISSN: 1435-0211, DOI: 10.1007/S10086-012-1312-4 [retrieved on 2012-11-18] | 1-9 | INV. B01J20/20 B01D15/08 B01D53/02 B01J20/28 B01J20/30 |
| Y | * In the abstract, the method of page 134.; tables 1,3 * | 10-13 | |
| Y | US 2023/107676 A1 (PILLA SRIKANTH [US] ET AL) 6 April 2023 (2023-04-06) * paragraph [0081] * | 10-13 | |
| X | WO 2024/050520 A1 (ADA CARBON SOLUTIONS LLC [US]) 7 March 2024 (2024-03-07) * Page 36, first complete paragraph; example 7 of table 9.; tables 2-5 * | 1-9,14, 15 | TECHNICAL FIELDS SEARCHED (IPC)

B01J B01D |
| X | WO 2020/112707 A1 (CABOT CORP [US]) 4 June 2020 (2020-06-04) * Table bridging pages 11-12 - sample1, sample 2; [0017].; paragraph [0027] - paragraph [0028] * | 1-9,14, 15 | |
| A | KR 100 886 365 B1 (UNIV NAT CHONNAM IND FOUND [KR]) 3 March 2009 (2009-03-03) * Table of page 8. * | 1-15 | |

-/--

The present search report has been drawn up for all claims

| Place of search | Date of completion of the search | Examiner |
|---|---|---|
| The Hague | 12 September 2024 | Mc Donnell, Shane |

page 1 of 2

Europäisches
Patentamt

European
Patent Office

Office européen
des brevets

# EUROPEAN SEARCH REPORT

**Application Number**

EP 24 16 7584

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 8 926 932 B2 (PFEIFER PETER [US]; SUPPES GALEN J [US] ET AL.) 6 January 2015 (2015-01-06) * Table 9, KC4, KC5; IV. Fabrication Process for Activated Carbons. * ----- | 1-15 | |
| A | CN 116 161 648 A (UNIV BEIJING) 26 May 2023 (2023-05-26) * example 5 * ----- | 1-15 | |

TECHNICAL FIELDS
SEARCHED     (IPC)

The present search report has been drawn up for all claims

| Place of search | Date of completion of the search | Examiner |
|---|---|---|
| The Hague | 12 September 2024 | Mc Donnell, Shane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 16 7584

12-09-2024

| Patent document cited in search report | Publication date | Patent family member(s) | Publication date |
|---|---|---|---|
| US 2023107676 A1 | 06-04-2023 | NONE | |
| WO 2024050520 A1 | 07-03-2024 | US 2024116023 A1 | 11-04-2024 |
| | | WO 2024050520 A1 | 07-03-2024 |
| WO 2020112707 A1 | 04-06-2020 | CA 3120955 A1 | 04-06-2020 |
| | | US 2022096981 A1 | 31-03-2022 |
| | | WO 2020112707 A1 | 04-06-2020 |
| KR 100886365 B1 | 03-03-2009 | NONE | |
| US 8926932 B2 | 06-01-2015 | BR PI0718589 A2 | 16-06-2015 |
| | | CA 2668887 A1 | 15-05-2008 |
| | | EP 2109868 A2 | 21-10-2009 |
| | | JP 5523102 B2 | 18-06-2014 |
| | | JP 5763228 B2 | 12-08-2015 |
| | | JP 2010509174 A | 25-03-2010 |
| | | JP 2014111537 A | 19-06-2014 |
| | | KR 20090094088 A | 03-09-2009 |
| | | US 2008207442 A1 | 28-08-2008 |
| | | US 2012094828 A1 | 19-04-2012 |
| | | US 2013190542 A1 | 25-07-2013 |
| | | WO 2008058231 A2 | 15-05-2008 |
| CN 116161648 A | 26-05-2023 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7361280 B2
- US 10702853 B2
- US 9023755 B2
- US 9120079 B1
- US 20230107676 A1
- US 20230234024 A1
- EP 3619283 B1

**Non-patent literature cited in the description**

- **D DITTMANN et al.** Characterization of activated carbons for water treatment using TGA-FTIR for analysis of oxygen-containing functional groups. *Applied Water Science*, 15 July 2022